# EUROPEAN PATENT APPLICATION

(11) **EP 4 289 391 A1**
(43) Date of publication of application: **13.12.2023**
(21) Application number: 23712144.7
(22) Date of filing: 17.03.2023
(51) Int. Cl.: A61C 8/00

(54) **ADJUSTABLE UNIVERSAL COMPOSITE ABUTMENT FOR DENTAL IMPLANT MADE OF BIOMEDICAL MATERIAL**

(30) Priority: 27.04.2022 CN 202210448235
(71) Applicant: Gaofeng Medical Equipment (Wuxi) Co., Ltd, Huishan Economic Development Zone Wuxi, Jiangsu 214000 (CN)
(72) Inventor: GAO, Jun, Wuxi, Jiangsu 214000 (CN); GAO, Xingrong, Wuxi, Jiangsu 214000 (CN); BAO, Yaxing, Wuxi, Jiangsu 214000 (CN)
(74) Representative: Chung, Hoi Kan
(86) International application number: PCT/CN2023/082126
(87) International publication number: WO 2023/207409

(57) **Abstract**

The present invention relates to the field of dental implant bridge repair, in particular to an adjustable universal composite abutment made of biomedical materials for dental implants, including an implant; wherein a fixing block is installed on the implant; a lower abutment is installed on a top part of the fixing block; an arc-shaped plate is installed on a top part of the lower abutment; a bottom part of the arc-shaped plate is located inside the lower abutment; an upper abutment is installed on a top part of the arc-shaped plate, an adjusting hole is provided on the bottom part of the arc-shaped plate; and a top part of the implant passes through the adjusting hole, and a fixing ring is installed on the top part of the implant; an installation hole is provided on the top of the implant; a hexagonal hole is provided on an inner bottom part of the installation hole; and an installation mechanism is provided in the installation hole. When in use, the present invention can adjust angles of the upper abutment according to use situations, and at the same time, when in use, operators do not need to insert fingers into the oral cavity of patients, which is more convenient.

## Description

### Technical field

The present invention relates to the technical field of dental implant bridge repair, in particular to an adjustable universal composite abutment made of biomedical materials for dental implants.

### Background technology

Dental implant bridge technology, a common technology in dental restoration, is a repair technology in which more than two dental implants used to fill missing teeth in succession are connected together through a bridge. This repair method can disperse bite forces, replace the base through implant supports, thus reducing foreign body sensation in patient's mouth. Fixed prosthesis is beautiful and function thereof is close to the function of natural teeth.

Bridge body repair requires high positioning of bridge body products. Usually, it is difficult for doctors to ensure a common positioning direction when multiple implants are implanted. Normally, many composite abutments with different angles are made to solve the problem above, which leads to huge stocking pressure for doctors or manufacturers, but it is still impossible to fully meet unpredictable angle changes. At the same time, when planting the implant, the staff need to insert their fingers into the patient's mouth to install the implant, which makes it extremely inconvenient to use, and the patient's mouth is wide open for a long time, which will cause the patient's oral muscles to ache, and it is easy to dislocate the patient's jaw.

### Summary of the invention

A purpose of the present invention is to solve shortcomings in the prior art, and to provide an adjustable universal composite abutment made of biomedical materials for dental implants.

In order to achieve the above purpose, the present invention adopts the following technical solutions:
an adjustable universal composite abutment made of biomedical materials for dental implants, comprising an implant; wherein a fixing block is installed on the implant; a lower abutment is installed on a top part of the fixing block; an arc-shaped plate is installed on a top part of the lower abutment; a bottom part of the arc-shaped plate is located inside the lower abutment; an upper abutment is installed on a top part of the arc-shaped plate, an adjusting hole is provided on the bottom part of the arc-shaped plate; and a top part of the implant passes through the adjusting hole, and a fixing ring is installed on the top part of the implant; an installation hole is provided on the top of the implant; a hexagonal hole is provided on an inner bottom part of the installation hole; and an installation mechanism is provided in the installation hole.

Preferably, the installation mechanism comprises a limiting ring; a sleeve is installed at a top part of the limiting ring; a top end of the sleeve penetrates through the upper abutment; a lifting rod is slidably installed in the sleeve; and a hexagonal block is installed at a bottom part of the limiting ring; and the hexagonal block is located in the hexagonal hole.

Preferably, an installation groove is provided on an inner wall of the sleeve; a lifting block is installed at an inner top part of the installation groove; and a bottom part of the lifting rod is installed on a top part of the lifting block; a spring is installed between a inner bottom part of the installation groove and the lifting block;

Preferably, a rubber bladder is installed inside the sleeve; and the spring is wound and installed on an outer wall of the rubber bladder; a plurality of air outlets are provided on the rubber bladder; and a plurality of vents are provided near an edge of a top part of the lifting block.

Preferably, a bottom plate is installed at an end part of the lifting rod away from the lifting block; a limiting plate is installed at a bottom part of the bottom plate; and a sliding hole runs through a bottom part of the limiting plate; and a placement groove is installed at one side of the bottom plate proximal to the limiting plate.

Preferably, the lifting rod is slidably sleeved in the sliding hole, and an end part of the lifting rod away from the lifting block is installed on an inner wall of the placement groove; and a limiting groove is provided on one side of the bottom plate away from the limiting plate.

Preferably, a plurality of through-holes are formed in an inner top part of the placement groove and the placement groove communicates with the limiting groove through the through-holes.

Preferably, placement holes are provided on both end parts of the inner top parts of the placement groove; guiding plates are provided on both end parts of the limiting plate; and the guiding plates are respectively installed in the two placement holes in a sliding way.

Preferably, a plurality of fixing teeth are provided on one side of the limiting plate proximal to the placement groove; a top part of the limiting plate is provided with cotton cloths; middle parts of the cotton cloths are installed in the placement groove; and the two end parts of the cotton cloths are respectively located at both end parts of the limiting plate.

Compared with the prior art, the present invention has beneficial effects that:
1. In the present invention, when in use, the bottom part of the arc-shaped plate and the lower abutment cooperate with each other, and the bottom part of the arc-shaped plate abuts against an inner wall of the lower abutment; when in use, the operator can adjust angles of the upper abutment and the arc-shaped plate; the implant slides in the adjusting hole and at the same time, the implant can limit adjustment angles of the upper abutment; when in use, a bottom edge part of the fixing ring is arc-shaped, which can better protect the lower abutment and the arc-shaped plate when adjusting the angles of the upper abutment and prevent the lower abutment and the arc-shaped plate from rubbing against each other; and when in use, angle adjustment of a plurality of implants can be realized through the arc-shaped plate and the upper abutment, thus satisfying a restoration effect of a passive position of the implant bridge and at the same time, number of visits of patients can be reduced.
2. When the patient bites the bottom plate, through elasticity of the spring, the lifting rod can push the bottom plate to better contact with the patient's teeth, so that the stability of the bottom plate can be improved when in use; at the same time, the implant can be pressed down when the implant is installed, and the operator can rotate the sleeve through a small wrench outside the patient's mouth; and when the sleeve rotates, the hexagonal block can drive the implant to rotate, so as to realize installation and fixation of the implant; and when in use, the operator do not need to insert fingers into the patient's mouth to install and fix positions of the implant, which is more convenient and hygienic when in use.
3. When a patient's teeth bite the lifting rod, the lifting block at the bottom part of the lifting rod can squeeze a top part of the rubber bladder located inside the sleeve; the air inside the rubber bladder can be discharged into space above the lifting block in the sleeve through a plurality of vents, and gradually spread to the patient's mouth, so that the patient's mouth can be cleaned and deodorized when in use, and it is more convenient for the operator to plant implants during use.
4. When the operator installs the implant, the cotton cloths on the limiting plate can absorb the saliva in the patient's mouth, so as to prevent the patient's saliva from flowing out of the mouth when the operator installs the implant; at the same time, when the patient's teeth bite the bottom plate, the limiting plate can be moved down, and the operator can manually wipe the implant installation position through the cotton cloths, so that the patient's mouth can be kept clean when in use; and when in use, the operator can manually adjust the positions of the limiting plate, and the cotton cloths on the limiting plate can be installed and replaced.

### Description of drawings

Fig. 1 is a perspective view of an adjustable universal composite abutment made of biomedical materials for dental implants in the present invention;
Fig. 2 is a schematic diagram of an installation structure of a lower abutment of the adjustable universal composite abutment made of biomedical materials for dental implants in the present invention;
Fig. 3 is a schematic diagram of an installation structure of a fixing ring of the adjustable universal composite abutment made of biomedical materials for dental implants in the present invention;
Fig. 4 is a schematic structural diagram of an arc-shaped plate of the adjustable universal composite abutment made of biomedical materials for dental implants in the present invention;
Fig. 5 is a schematic structural diagram of an implant of the adjustable universal composite abutment made of biomedical materials for dental implants in the present invention;
Fig. 6 is a schematic diagram of an installation structure of a sleeve of the adjustable universal composite abutment made of biomedical materials for dental implants in the present invention;
Fig. 7 is a schematic structural diagram of the sleeve of an adjustable universal composite abutment made of biomedical materials for dental implants in the present invention;
Fig. 8 is a schematic diagram of an internal structure of the sleeve of the adjustable universal composite abutment made of biomedical materials for dental implants in the present invention;
Fig. 9 is a sectional view of the sleeve of the adjustable universal composite abutment made of biomedical materials for dental implants in the present invention;
Fig. 10 is a schematic diagram of an installation structure of a limit plate of the adjustable universal composite abutment made of biomedical materials for dental implants in the present invention;
Fig. 11 is a schematic diagram of a top structure of a bottom plate of the adjustable universal composite abutment made of biomedical materials for dental implants in the present invention;
Fig. 12 is a schematic diagram of a bottom structure of the bottom plate of the adjustable universal composite abutment made of biomedical materials for dental implants in the present invention; and
Fig. 13 is a schematic structural diagram of the limit plate of the adjustable universal composite abutment made of biomedical materials for dental implants in the present invention.

In the drawings: 1. implant; 2. fixing block; 3. lower abutment; 4. arc-shaped plate; 5. upper abutment; 6. sleeve; 7. lifting rod; 8. bottom plate; 9. limiting plate; 10. fixing ring; 11. installation hole; 12. hexagonal hole; 13. adjusting hole; 14. limiting ring; 15. hexagonal block; 16. spring; 17. lifting block; 18. vent; 19. rubber bladder; 20. air outlet; 21. installation groove; 22. limiting groove; 23. through-hole; 24. placement hole; 25. placement groove; 26. guiding plate; 27. fixing tooth; and 28. sliding hole.

### Embodiments

In the following paragraphs, technical solutions in the embodiments of the present invention will be clearly and completely described with reference to the attached drawings. Obviously, the described embodiments are only some of embodiments of the present invention, but not the whole embodiments.

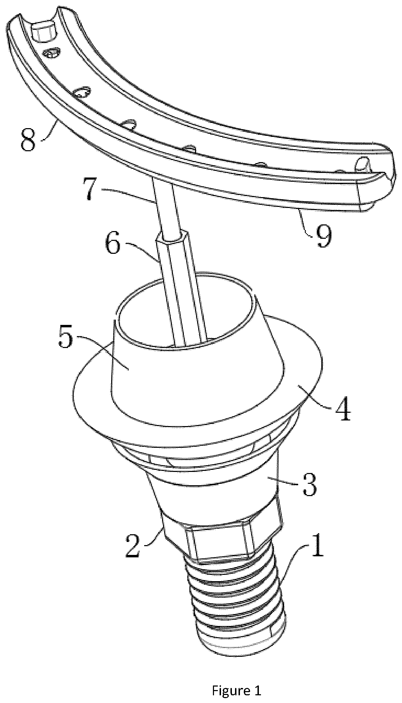

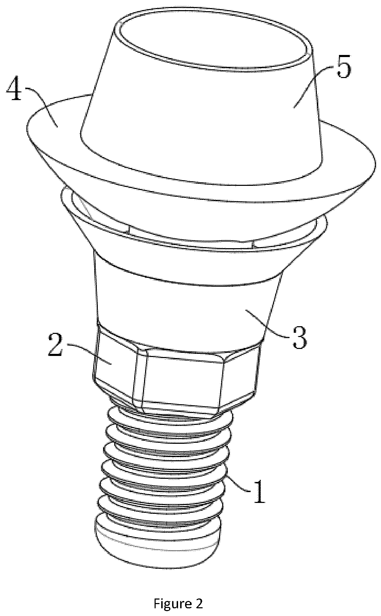

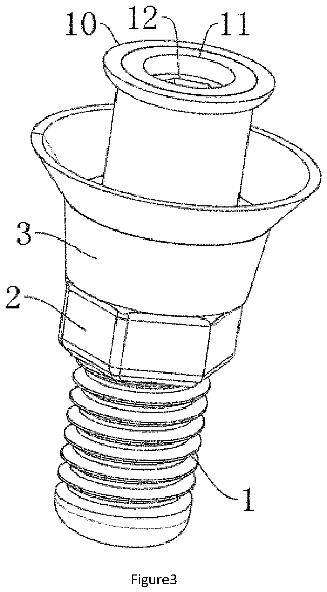

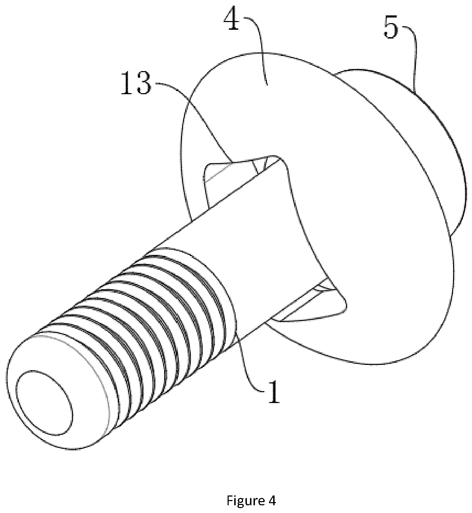

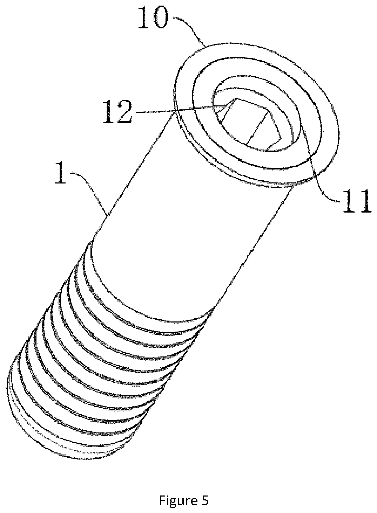

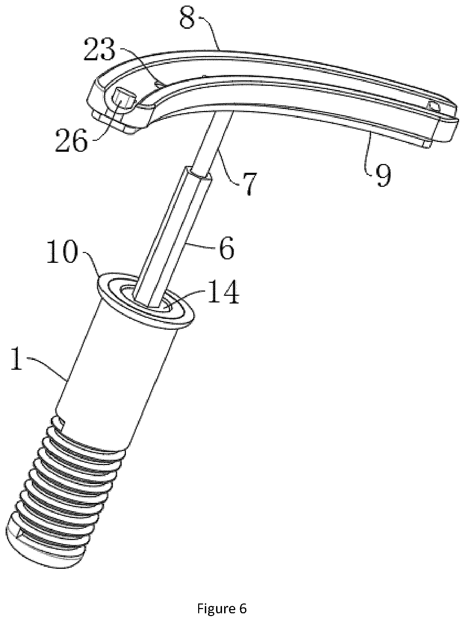

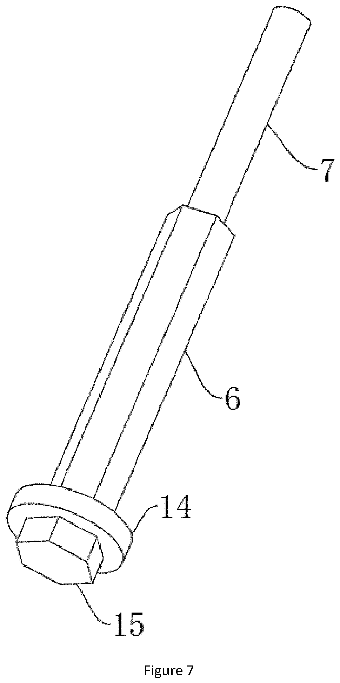

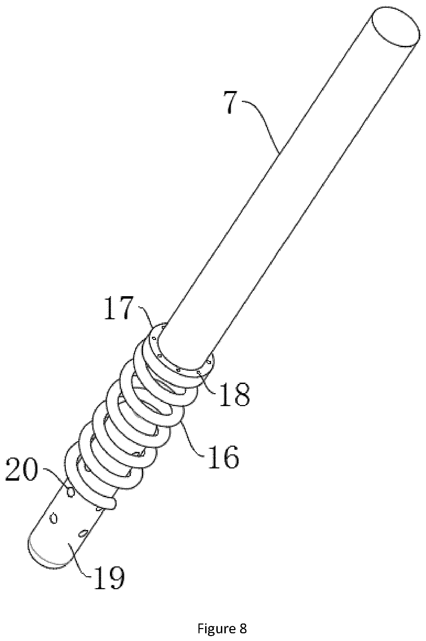

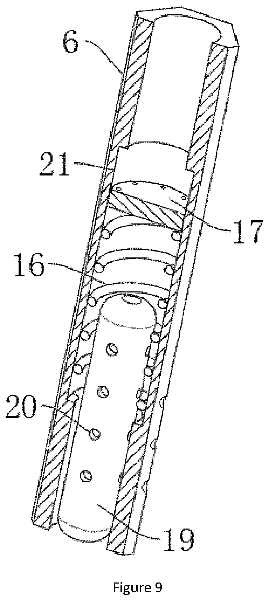

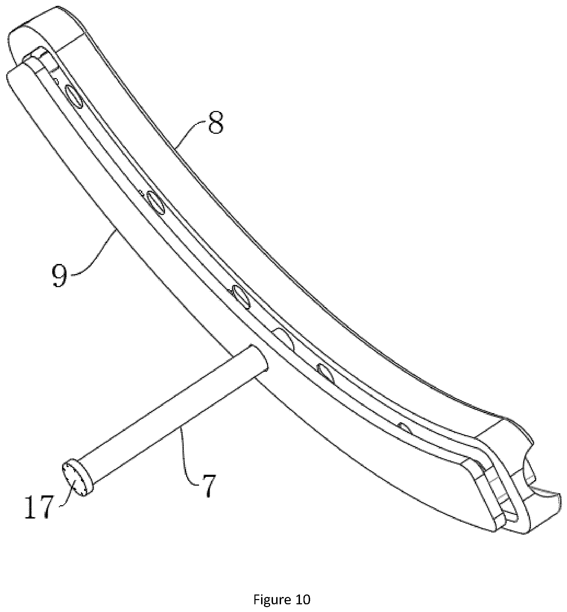

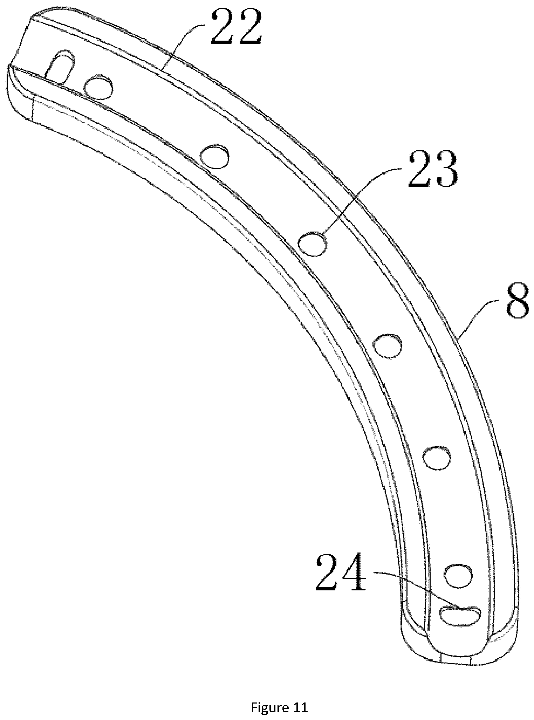

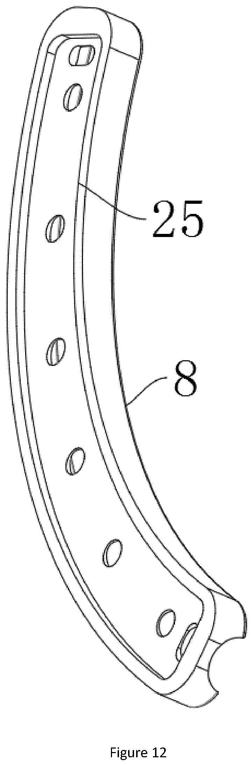

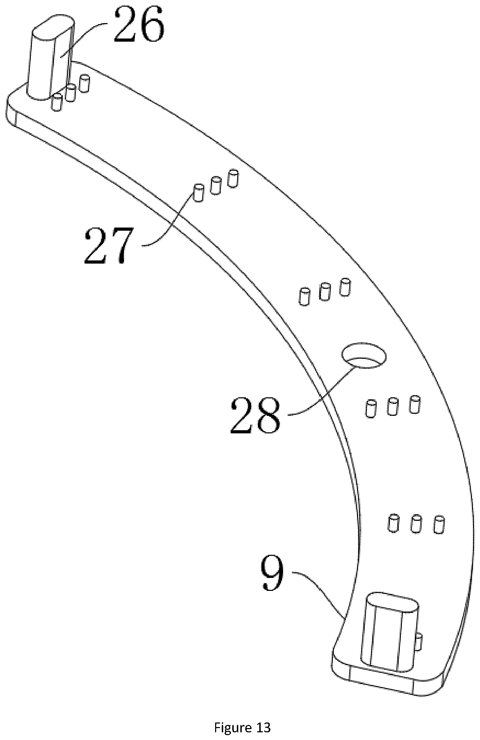

Referring to figs. 1-13, an adjustable universal composite abutment made of biomedical materials for dental implants comprises an implant 1; a fixing block 2 is installed on the implant 1; a lower abutment 3 is installed on a top part of the fixing block 2; an arc-shaped plate 4 is installed on a top part of the lower abutment 3; a bottom part of the arc-shaped plate 4 is located inside the lower abutment 3; an upper abutment 5 is installed on a top part of the arc-shaped plate 4, an adjusting hole 13 is provided on the bottom part of the arc-shaped plate 4; and a top part of the implant 1 passes through the adjusting hole 13, and a fixing ring 10 is installed on the top part of the implant 1; an installation hole 11 is provided on the top of the implant 1; a hexagonal hole 12 is provided on an inner bottom part of the installation hole 11; and an installation mechanism is provided in the installation hole 11.

As a technical optimization solution of the present invention, the installation mechanism comprises a limiting ring 14; a sleeve 6 is installed at a top part of the limiting ring 14; a top end of the sleeve 6 penetrates through the upper abutment 5; a lifting rod 7 is slidably installed in the sleeve 6; and a hexagonal block 15 is installed at a bottom part of the limiting ring 14; the hexagonal block 15 is located in the hexagonal hole 12; when in use, an operator can selectively install the hexagonal block 15 in the hexagonal hole 12; when in use, the operator can rotate the sleeve 6 outside the patient's oral cavity through a small wrench, and the implant 1 is driven to rotate through the sleeve 6 to realize installation of the implant 1; and when in use, the operator does not need to put his finger into the patient's oral cavity to rotate and install the implant 1, which is more sanitary.

As a technical optimization solution of the present invention, an installation groove 21 is provided on an inner wall of the sleeve 6; a lifting block 17 is installed at an inner top part of the installation groove 21; and a bottom part of the lifting rod 7 is installed on a top part of the lifting block 17; a spring 16 is installed between a inner bottom part of the installation groove 21 and the lifting block 17; when in use, the patient can bite the lifting rod 7 through a row of teeth away from the implant 1, and the implant 1 is driven to press down by biting forces transmitted through the lifting rod 7; and the operator cooperates with the patient to rotate the sleeve 6, and the patient can adjust the biting forces transmitted through the lifting rod 7 according to the actual situation when in use.

As a technical optimization solution of the present invention, a rubber bladder 19 is installed inside the sleeve 6; and the spring 16 is wound and installed on an outer wall of the rubber bladder 19; a plurality of air outlets 20 are provided on the rubber bladder 19; a plurality of vents 18 are provided near an edge of a top part of the lifting block 17; when the patient bites the lifting rod 7, the lifting block 17 at the bottom part of the lifting rod 7 can squeeze the rubber bladder 19; mint balls can be installed in the rubber bladder 19 before use; and as the lifting block 17 squeezes the rubber bladder 19, gas emitted by the mint balls inside the rubber bladder 19 can be exhausted to the inside part of the sleeve 6, and then discharged into the patient's mouth again through the vents 18 on the lifting block 17, so as to freshen and purify the patient's mouth.

As a technical optimization solution of the present invention, a bottom plate 8 is installed at an end part of the lifting rod 7 away from the lifting block 17; a limiting plate 9 is installed at a bottom part of the bottom plate 8; and a sliding hole 28 runs through a bottom part of the limiting plate 9; a placement groove 25 is installed at one side of the bottom plate 8 proximal to the limiting plate 9; and when in use, the lifting rod 7 and the limiting plate 9 cooperate with each other, and the lifting rod 7 can limit positions of the limiting plate 9, and the limiting plate 9 can make the lifting rod 7 more stable when the sleeve 6 rotates.

As a technical optimization solution of the present invention, the lifting rod 7 is slidably sleeved in the sliding hole 28, and an end part of the lifting rod 7 away from the lifting block 17 is installed on an inner wall of the placement groove 25; a limiting groove 22 is provided on one side of the bottom plate 8 away from the limiting plate 9; and when in use, a row of teeth of the patient far away from the implant 1 can be placed limiting groove 22, and the limiting groove 22 can play a better role in fixing the positions of the patient's teeth when the patient bites the lifting rod 7 through the teeth.

As a technical optimization solution of the present invention, a plurality of through-holes 23 are formed in an inner top part of the placement groove 25, and the placement groove 25 communicates with the limiting groove 22 through the through-holes 23; placement holes 24 are provided on both end parts of the inner top parts of the placement groove 25; guiding plates 26 are provided on both end parts of the limiting plate 9; the guiding plates 26 are respectively installed in the two placement holes 24 in a sliding way, so that when the patient bites the bottom plate 8, the patient's teeth can also press down the guiding plates 26; the guiding plates 26 drives the limiting plate 9 to move down, and a distance between the bottom plate 8 and the limit plate 9 is adjusted, so that the lifting rod 7 is more stable when the sleeve 6 rotates; at the same time, clamping forces on cotton cloths can be relaxed, so that two end parts of the cotton cloths are in contact with two sides of the teeth; and when in use, the cotton cloths can absorb and collect saliva in the patient's mouth, so that the operator can better install the implant 1 in the patient's mouth.

As a technical optimization solution of the present invention, a plurality of fixing teeth 27 are provided on one side of the limiting plate 9 proximal to the placement groove 25; a top part of the limiting plate 9 is provided with the cotton cloths; middle parts of the cotton cloths are installed in the placement groove 25; the two end parts of the cotton cloths are respectively located at the both end parts of the limiting plate 9; when in use, the cotton cloths are hooked on the fixing teeth 27, and the fixing teeth 27 can fix the cotton cloths well; when in use, the operator can pull the limiting plate 9, the distance between the bottom plate 8 and the limiting plate 9 can be manually adjusted, so that the clamping forces on the cotton cloths from the bottom plate 8 and the limiting plate 9 are removed, and the operator can manually take off the cotton cloths; and when in use, the operator can manually wipe a periphery of installation position of the implant 1 through the cotton cloths.

As a technical optimization solution of the present invention, when the implant 1 needs to be installed, the operator can install one end of the implant 1 in a designated installation sleeve inside the patient's mouth; when installing and fixing the implant 1, the operator can install the limiting ring 14 at a bottom part of the sleeve 6 in the installation hole 11, and the hexagonal block 15 on one side of the limiting ring 14 is installed in the hexagonal hole 12; the operator installs the bottom plate 8 on a row of teeth in the patient's mouth far away from the implant 1; the patient's teeth are located in the limiting groove 22 on the bottom plate 8; and when in use, the patient's teeth can bite the bottom plate 8, and the limiting groove 22 can better limit the patient's teeth, so as to prevent the bottom plate 8 from changing when the patient bites the bottom plate 8, and stability of the bottom plate 8 is better.

When the patient bites the bottom plate 8, the bottom plate 8 can drive the lifting rod 7 to move to the inside part of the sleeve 6; when the lifting rod 7 moves, the lifting rod 7 can press down the spring 16 through the lifting block 17 at the bottom end thereof; the lifting rod 7 can press down the sleeve 6 through the spring 16; at the same time, when the sleeve 6 is pressed down, the spring 16 can stabilize a downward pressure of the lifting rod 7; at the same time, through elasticity of the spring 16, the lifting rod 7 can push the bottom plate 8 to better contact with the patient's teeth, so that the stability of the bottom plate 8 can be improved when in use; at the same time, the implant 1 can be pressed down when the implant 1 is installed, and the operator can rotate the sleeve 6 through a small wrench outside the patient's mouth; and when the sleeve 6 rotates, the hexagonal block 15 can drive the implant 1 to rotate, so as to realize installation and fixation of the implant 1.

When a patient's teeth bite the lifting rod 7, the lifting block 17 at the bottom part of the lifting rod 7 can squeeze a top part of the rubber bladder 19 located inside the sleeve 6; before the rubber bladder 19 is used, a certain amount of mint balls, breath freshener or gas for disinfection can be placed in the rubber bladder 19, and a certain amount of gas can be injected into the rubber bladder 19; when in use, the temperature inside the patient's mouth can make the smell of mint balls gradually spread to the rubber bladder 19 and mix with air inside the rubber bladder 19; when the lifting block 17 squeezes the rubber bladder 19, the air inside the rubber bladder 19 can be exhausted to the inside part of the sleeve 6 through the air outlets 20 on the outer wall of the rubber bladder 19; and with the movement of the lifting block 17, air located below the lifting block 17 in the sleeve 6 can be discharged into space above the lifting block 17 in the sleeve 6 through a plurality of vents 18, and gradually spread to the patient's mouth, so that the patient's mouth can be cleaned and deodorized when in use.

When the patient's teeth bite the bottom plate 8, the guiding plates 26 located at both ends inside the limiting groove 22 are driven to move and when the guiding plates 26 move, the limiting plate 9 can be driven to move; before use, the operator can install several cotton cloths on one side of the limiting plate 9 near the bottom plate 8, and all the cotton cloths are hooked on the fixing teeth 27, and insert the guiding plates 26 on the limiting plate 9 into the placement holes 24, so that the bottom plate 8 and the limiting plate 9 can clamp the cotton cloths; when the limiting plate 9 moves away from the bottom plate 8, the clamping forces from the bottom plate 8 and the limiting plate 9 on the cotton cloths are reduced; the operator can also manually adjust the positions of the limiting plate 9, which is convenient for the operator to manually extract and use the cotton cloths; when the patient's teeth bite the bottom plate 8, the cotton cloths can absorb saliva around the teeth, which is convenient for the operator to install and fix the implant 1; when installing the implant 1, the operator can also extract the cotton cloths on the limiting plate 9 and manually clean the installation position of the implant 1, which is more convenient when using; and after the implant 1 is installed, the operator can directly disassemble the sleeve 6 and the bottom plate 8.

When the operator install the upper abutment 5, a top end part of the implant 1 can be sleeved in the adjusting hole 13, and the fixing ring 10 on the implant 1 is located in the upper abutment 5; when in use, the bottom part of the arc-shaped plate 4 and the lower abutment 3 cooperate with each other, and the bottom part of the arc-shaped plate 4 abuts against an inner wall of the lower abutment 3; when in use, the operator can adjust angles of the upper abutment 5 and the arc-shaped plate 4; the implant 1 slides in the adjusting hole 13 and at the same time, the implant 1 can limit adjustment angles of the upper abutment 5; when in use, a bottom edge part of the fixing ring 10 is arc-shaped, which can better protect the lower abutment 3 and the arc-shaped plate 4 when adjusting the angles of the upper abutment 5 and prevent the lower abutment 3 and the arc-shaped plate 4 from rubbing against each other; and when in use, angle adjustment of a plurality of implants 1 can be realized through the arc-shaped plate 4 and the upper abutment 5, thus satisfying a restoration effect of a passive position of the implant bridge.

The above are only the preferred embodiments of the present invention, but the protective scope of the present invention is not limited to these. Any equivalent substitutions or changes made by any person familiar with the technical field according to the technical solutions and inventive concepts of the present invention within the technical scope disclosed by the present invention should be covered by the protective scope of the present invention.

## Claims

1. An adjustable universal composite abutment made of biomedical materials for dental implants, comprising an implant (1); wherein a fixing block (2) is installed on the implant (1); a lower abutment (3) is installed on a top part of the fixing block (2); an arc-shaped plate (4) is installed on a top part of the lower abutment (3); a bottom part of the arc-shaped plate (4) is located inside the lower abutment (3); an upper abutment (5) is installed on a top part of the arc-shaped plate (4), an adjusting hole (13) is provided on the bottom part of the arc-shaped plate (4); and a top part of the implant (1) passes through the adjusting hole (13), and a fixing ring (10) is installed on the top part of the implant (1); an installation hole (11) is provided on the top of the implant (1); a hexagonal hole (12) is provided on an inner bottom part of the installation hole (11); and an installation mechanism is provided in the installation hole (11).

2. The adjustable universal composite abutment made of biomedical materials for dental implants according to claim 1, wherein the installation mechanism comprises a limiting ring (14); a sleeve (6) is installed at a top part of the limiting ring (14); a top end of the sleeve (6) penetrates through the upper abutment (5); a lifting rod (7) is slidably installed in the sleeve (6); a hexagonal block (15) is installed at a bottom part of the limiting ring (14); and the hexagonal block (15) is located in the hexagonal hole (12).

3. The adjustable universal composite abutment made of biomedical materials for dental implants according to claim 2, wherein an installation groove (21) is provided on an inner wall of the sleeve (6); a lifting block (17) is installed at an inner top part of the installation groove (21); and a bottom part of the lifting rod (7) is installed on a top part of the lifting block (17); and a spring (16) is installed between a inner bottom part of the installation groove (21) and the lifting block (17).

4. The adjustable universal composite abutment made of biomedical materials for dental implants according to claim 3, wherein a rubber bladder (19) is installed inside the sleeve (6); and the spring (16) is wound and installed on an outer wall of the rubber bladder (19); a plurality of air outlets (20) are provided on the rubber bladder (19); and a plurality of vents (18) are provided near an edge of a top part of the lifting block (17);

5. The adjustable universal composite abutment made of biomedical materials for dental implants according to claim 2, wherein a bottom plate (8) is installed at an end part of the lifting rod (7) away from the lifting block (17); a limiting plate (9) is installed at a bottom part of the bottom plate (8); and a sliding hole (28) runs through a bottom part of the limiting plate (9); and a placement groove (25) is installed at one side of the bottom plate (8) proximal to the limiting plate (9).

6. The adjustable universal composite abutment made of biomedical materials for dental implants according to claim 5, wherein the lifting rod (7) is slidably sleeved in the sliding hole (28), and an end part of the lifting rod (7) away from the lifting block (17) is installed on an inner wall of the placement groove (25); and a limiting groove (22) is provided on one side of the bottom plate (8) away from the limiting plate (9).

7. The adjustable universal composite abutment made of biomedical materials for dental implants according to claim 6, wherein a plurality of through-holes (23) are formed in an inner top part of the placement groove (25), and the placement groove (25) communicates with the limiting groove (22) through the through-holes (23).

8. The adjustable universal composite abutment made of biomedical materials for dental implants according to claim 6, wherein placement holes (24) are provided on both end parts of the inner top parts of the placement groove (25); guiding plates (26) are provided on both end parts of the limiting plate (9); and the guiding plates (26) are respectively installed in the two placement holes (24) in a sliding way.

9. The adjustable universal composite abutment made of biomedical materials for dental implants according to claim 5, wherein a plurality of fixing teeth (27) are provided on one side of the limiting plate (9) proximal to the placement groove (25); a top part of the limiting plate (9) is provided with cotton cloths; intermediate parts of the cotton cloths are installed in the placement groove (25); and two ends of the cotton cloths are respectively located at both end parts of the limiting plate (9).
